(19) Europäisches Patentamt
European Patent Office
Office européen des brevets

(11) EP 4 516 827 A1

(12) EUROPEAN PATENT APPLICATION
published in accordance with Art. 153(4) EPC

(43) Date of publication:
**05.03.2025 Bulletin 2025/10**

(21) Application number: **23796285.7**

(22) Date of filing: **21.04.2023**

(51) International Patent Classification (IPC):
***C08F 290/06*** *(2006.01)* ***C08F 20/00*** *(2006.01)*
***C08F 220/34*** *(2006.01)* ***C11D 3/26*** *(2006.01)*
***C11D 3/37*** *(2006.01)* ***C11D 7/26*** *(2006.01)*
***C11D 7/32*** *(2006.01)* ***D06L 1/12*** *(2006.01)*
***D06M 15/267*** *(2006.01)* ***D06M 15/27*** *(2006.01)*

(52) Cooperative Patent Classification (CPC):
**C08F 20/00; C08F 220/34; C08F 290/06; C11D 3/26; C11D 3/37; C11D 7/26; C11D 7/32; D06L 1/12; D06M 15/267; D06M 15/27**

(86) International application number:
**PCT/JP2023/015994**

(87) International publication number:
**WO 2023/210543 (02.11.2023 Gazette 2023/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.04.2022 JP 2022072815**
**03.10.2022 JP 2022159184**

(71) Applicant: **Nippon Shokubai Co., Ltd.**
**Osaka-shi, Osaka 541-0043 (JP)**

(72) Inventors:
- **MATSUMOTO, Rika**
  **Suita-shi, Osaka 564-0034 (JP)**
- **ITO, Ryota**
  **Suita-shi, Osaka 564-0034 (JP)**

(74) Representative: **Cabinet Beau de Loménie**
**158, rue de l'Université**
**75340 Paris Cedex 07 (FR)**

# (54) AMINO-GROUP-CONTAINING COPOLYMER

(57) The present invention aims to provide an amino group-containing copolymer having excellent soil release properties and a method for producing a soil release agent using the same. The present invention relates to an amino group-containing copolymer containing a structural unit (a) derived from an amino group-containing monomer, a structural unit (b) derived from a monomer having a polyalkylene glycol chain, a structural unit (c) derived from a hydrophobic monomer, and a structural unit (d) derived from an unsaturated carboxylic acid monomer.

EP 4 516 827 A1

## Description

### TECHNICAL FIELD

The present invention relates to an amino group-containing copolymer. Specifically, the present invention relates to an amino group-containing copolymer useful for detergent applications such as liquid detergents and powder detergents.

### BACKGROUND ART

To easily remove sebum soil and other soil that adhere to clothing by washing, it is effective to treat the textiles in advance with a compound that can adsorb to the textiles. Such a function is called soil release properties.
Various compounds that exhibit soil release properties have been proposed. For example, Patent Literature 1 discloses that a polymer including a (meth)acrylic acid ester having a primary to tertiary amino group and an unsaturated bond-containing monomer having a hydrophobic group has an excellent soil-releasing effect on cotton fabric.
For example, Patent Literature 2 discloses that a composition containing a polymer having a quaternary ammonium group and a hydrophilic group has a soil-removing effect on cotton fabric.

### CITATION LIST

- Patent Literature

Patent Literature 1: JP 5014739 B
Patent Literature 2: JP H11-505568 T

### SUMMARY OF INVENTION

- Technical Problem

The soil release properties of amino group-containing polymers have already been disclosed as described above. However, the soil release properties for polyester textiles, which particularly adsorb sebum soil easily, still have room for improvement.
The present invention has been made in consideration of the above-mentioned current state and aims to provide an amino group-containing copolymer having excellent soil release properties and a method for producing a soil release agent using the same.

- Solution to Problem

The present inventors have conducted various investigations to achieve the above object and have arrived at the present invention.
Specifically, the present disclosure relates to an amino group-containing copolymer containing: a structural unit (a) derived from an amino group-containing monomer; a structural unit (b) derived from a monomer having a polyalkylene glycol chain; a structural unit (c) derived from a hydrophobic monomer; and a structural unit (d) derived from an unsaturated carboxylic acid monomer, the structural unit (a) being represented by the following formula (1):

[Chem. 1]

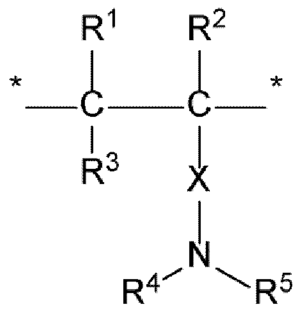

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; and X represents a divalent linking group, where each of asterisks represents an atom in another structural unit to which the structural unit represented by the formula (1) is bonded, with the another structural unit being the same as or different from the structural unit represented by the formula (1).

Preferably, a homopolymer of the hydrophobic monomer has a solubility parameter of 13 or less.

Preferably, the structural unit (a) derived from an amino group-containing monomer is present in a proportion of 5 to 50% by weight based on 100% by mass of all structural units.

Preferably, the structural unit (b) derived from a monomer having a polyalkylene glycol chain is present in a proportion of 5 to 75% by weight based on 100% by mass of all structural units.

Preferably, the structural unit (c) derived from a hydrophobic monomer is present in a proportion of 5 to 70% by weight based on 100% by mass of all structural units.

Preferably, the structural unit (d) derived from an unsaturated carboxylic acid monomer is present in a proportion of 1 to 20% by weight based on 100% by mass of all structural units.

Preferably, the amino group-containing copolymer has a weight average molecular weight of 4,000 or more and 500,000 or less.

The present invention also relates to a soil release agent containing the amino group-containing copolymer.

The present invention also relates to a method for using the amino group-containing copolymer for a soil release agent.

The present invention also relates to a method for producing a soil release agent, including: mixing the amino group-containing copolymer and a surfactant.

- Advantageous Effects of Invention

The amino group-containing copolymer of the present disclosure has excellent soil release properties and can therefore be suitably used especially in detergents and the like for textile products such as polyester.

DESCRIPTION OF EMBODIMENTS

The present invention is described in detail below.

A combination of two or more of individual preferred embodiments of the present invention described below is also a preferred embodiment of the present invention.

[Amino group-containing copolymer of the present disclosure]

The amino group-containing copolymer of the present disclosure (hereinafter also referred to as a copolymer of the present invention) contains a structural unit (a) derived from an amino group-containing monomer, a structural unit (b) derived from a monomer having a polyalkylene glycol chain, a structural unit (c) derived from a hydrophobic monomer, and a structural unit (d) derived from an unsaturated carboxylic acid monomer, which are described below.

The copolymer of the present disclosure having such a structure has excellent soil release properties, as well as excellent antibacterial properties and anti-redeposition properties.

<Structural unit (a) derived from amino group-containing monomer>

The structural unit (a) derived from an amino group-containing monomer in the present disclosure is a structural unit represented by the following formula (1):

[Chem. 2]

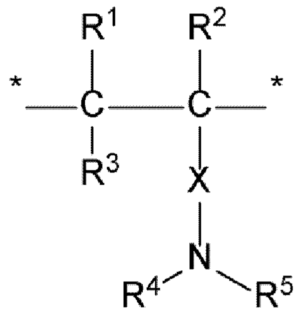

Formula (1)

wherein $R^1$, $R^2$, and $R^3$ each independently represent a hydrogen atom or a C1-C5 alkyl group; $R^4$ and $R^5$ each independently represent a hydrogen atom or a C1-C12 organic group; and X represents a divalent linking group, where each of asterisks represents an atom in another structural unit to which the structural unit represented by the formula (1) is bonded, with the another structural unit being the same as or different from the structural unit represented by the formula (1).

In the present disclosure, when the another structural unit is the same as, for example, the structural unit represented by the formula (1), the "atom in another structural unit" refers to an atom in another structural unit represented by the formula (1). When the another structural unit is different from, for example, the structural unit represented by the formula (1), the "atom in another structural unit" refers to an atom in a structural unit different from the structural unit represented by the formula (1).

The structural unit derived from an amino group-containing monomer represented by the formula (1) preferably contains a structural unit in which -X- is a direct bond or represented by -C(=O)-O-, -C(=O)-, $-C(=O)-O-(CH_2)_n-$ (n is 1 to 5), or $-C(=O)-N(-H)-(CH_2)_n-$ (n is 1 to 5). In particular, -X- is preferably $-C(=O)-O-(CH_2)_n-$. More preferably, n is 1 to 3, and particularly preferably, n is 2.

The structure derived from an amino group-containing monomer may be formed in any way and can be formed, for example, by radical polymerization of a monomer containing an ethylenically unsaturated group and a primary to tertiary amino group represented by the following formula (2) or a product obtained by neutralizing the primary to tertiary amino group with an acid.

[Chem. 3]

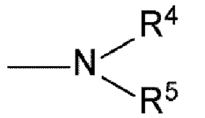

Formula (2)

$R^4$ and $R^5$ in the formula (2) are the same as $R^4$ and $R^5$ in the formula (1).

The structural unit (a) derived from an amino group-containing monomer is formed, for example, by radical polymerization of an amino group-containing monomer. Specific examples of the amino group-containing monomer include N,N-dialkylamino group-containing (meth)acrylates such as N,N-dimethylaminoethyl (meth)acrylate, N,N-diethylaminoethyl (meth)acrylate, N,N-dimethylaminopropyl (meth)acrylate, and N,N-diethylaminopropyl (meth)acrylate, and products obtained by neutralizing these with an acid such as hydrochloric acid or acetic acid; N,N-dialkylamino group-containing (meth)acrylamides such as N,N-dimethylaminoethyl (meth)acrylamide, N,N-diethylaminoethyl (meth)acrylamide, N,N-dimethylaminopropyl (meth)acrylamide, and N,N-diethylaminopropyl (meth)acrylamide, and products obtained by neutralizing these with an acid such as hydrochloric acid or acetic acid; monoalkylamino group-containing (meth) acrylates such as monomethylaminoethyl (meth)acrylate, monoethylaminoethyl (meth)acrylate, monomethylaminopropyl (meth)acrylate, monoethylaminopropyl (meth)acrylate, and 2-(tert-butylamino)ethyl (meth)acrylate, and products obtained by neutralizing these with an acid such as hydrochloric acid or acetic acid; monoalkylamino group-containing (meth)acrylamides such as monomethylaminoethyl (meth)acrylamide, monoethylaminoethyl (meth)acrylamide, monomethylaminopropyl (meth)acrylamide, and monoethylaminopropyl (meth)acrylamide, and products obtained by neutralizing these with an acid such as hydrochloric acid or acetic acid; esters of (meth)acrylic acid and alkanolamines, such as 2-aminoethyl (meth)acrylate, and products obtained by neutralizing these with an acid such as hydrochloric acid or acetic acid; N,N-diallylmethylamine and a product obtained by neutralizing this with an acid such as hydrochloric acid or acetic acid; allylamine and a product obtained by neutralizing this with an acid such as hydrochloric acid or acetic acid; and products obtained by an addition reaction of C1-C24 amine compounds with unsaturated monomers having a C2-C8 cyclic

ether-containing group, such as 1-allyloxy-3-dibutylamino-2-ol and 1-allyloxy-3-diethanolamino-2-ol, and products obtained by neutralizing these with an acid such as hydrochloric acid or acetic acid.

The structural unit (a) derived from an amino group-containing monomer is particularly preferably a structural unit derived from N,N-dimethylaminoethyl (meth)acrylate represented by the following formula (3):

[Chem. 4]

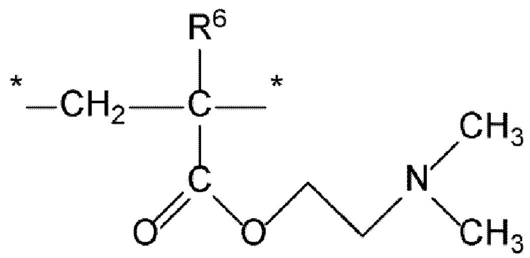

Formula (3)

wherein $R^6$ represents a hydrogen atom or a methyl group, where each of asterisks represents an atom in another structural unit to which the structural unit represented by the formula (3) is bonded, with the another structural unit being the same as or different from the structural unit represented by the formula (3). The structural unit (a) is most preferably a structural unit derived from N,N-dimethylaminoethyl methacrylate.

The amount of the structural unit (a) derived from an amino group-containing monomer in the copolymer of the present disclosure is 5% by mass or more and 50% by mass or less, preferably 7% by mass or more and 45% by mass or less, more preferably 8% by mass or more and 40% by mass or less, particularly preferably 10% by mass or more and 30% by mass or less, most preferably 15% by mass or more and 25% by mass or less, based on 100% by mass of all structural units derived from the monomers constituting the copolymer of the present disclosure (hereinafter also referred to as all structural units).

In one embodiment, the amount of the structural unit (a) based on 100% by mass of all structural units is preferably 8% by mass or more and 45% by mass or less, more preferably 10% by mass or more and 40% by mass or less, particularly preferably 15% by mass or more and 38% by mass or less, most preferably 20% by mass or more and 35% by mass or less.

Such an amount falling within the above ranges allows the copolymer to have cationic sites in an appropriate proportion that can act on a substrate such as textiles to which soil release properties are to be imparted. Thus, the detergent additive in the present disclosure tends to have improved soil release properties and antibacterial performance.

<Structural unit (b) derived from monomer having polyalkylene glycol chain>

The structural unit (b) derived from a monomer having a polyalkylene glycol chain in the present disclosure has a polyalkylene glycol chain in the structure. The structural unit (b) is represented, for example, by the following formula (4):

[Chem. 5]

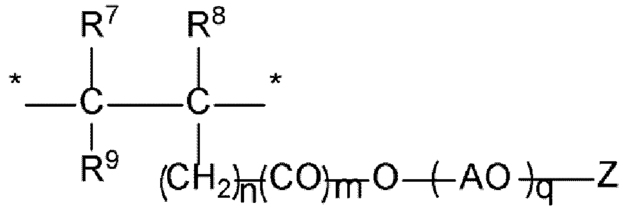

Formula (4)

wherein $R^7$, $R^8$, and $R^9$ each independently represent a hydrogen atom or a C1-C5 alkyl group optionally having a substituent; Z represents a hydrogen atom, a C1-C30 hydrocarbon group, a hydroxy group, a carboxy group, a sulfonic acid group, a phosphoric acid group, an amino group, or a salt thereof; A represents a C1-C10 alkylene group optionally having a substituent; q represents an average number of moles of (AO) added and is a number from 1 to 200; n represents a number from 0 to 4; and m represents 0 or 1.

$R^7$, $R^8$, and $R^9$ each independently represent a hydrogen atom or a C1-C5 alkyl group optionally having a substituent. The substituent is preferably at least one hydrophilic group selected from the group consisting of a hydroxy group, a carboxy group, a sulfonic acid group, a phosphoric acid group, an amino group, and groups of salts thereof.

The alkyl group is preferably a methyl group, an ethyl group, or a propyl group, more preferably a methyl group or an ethyl group, still more preferably a methyl group.

Preferably, $R^7$, $R^8$, and $R^9$ each independently represent a hydrogen atom or a methyl group. More preferably, $R^7$ and $R^9$ are each a hydrogen atom and $R^8$ is a hydrogen atom or a methyl group. Still more preferably, $R^7$ and $R^9$ are each a hydrogen atom and $R^8$ is a methyl group.

Z represents a hydrogen atom, a C1-C30 hydrocarbon group, a hydroxyl group, a carboxy group, a sulfonic acid group, a phosphoric acid group, an amino group, or a salt thereof. Non-limiting examples of the hydrocarbon group include chain hydrocarbon groups such as an alkyl group, an alkenyl group, and an alkynyl group, and cyclic hydrocarbon groups such as an aryl group, a cycloalkyl group, and a cycloalkenyl group. The hydrocarbon group may have a branch. When the hydrocarbon group has a branch, the number of carbon atoms thereof refers to a total number of carbon atoms in the main chain and branches.

Examples of the alkyl group include ethyl, propyl, isopropyl, butyl, isobutyl, hexyl, heptyl, 2-ethylhexyl, octyl, nonyl, decyl, dodecyl, stearyl, and icosyl groups.

Examples of the alkenyl group include vinyl, allyl, 1-butenyl, 2-butenyl, pentenyl, hexenyl, heptenyl, octenyl, nonenyl, decenyl, dodecenyl, octadecenyl, and icosenyl groups. Examples of the alkynyl group include ethynyl, 1-propynyl, 2-propynyl, butynyl, pentynyl, hexynyl, heptynyl, octynyl, nonynyl, decynyl, dodecynyl, octadecynyl, and icosynyl groups.

Examples of the aryl group include phenyl, benzyl, methylphenyl, 1-methoxy-4-methylphenyl, ethylphenyl, propylphenyl, butylphenyl, butylmethylphenyl, dimethylphenyl, diethylphenyl, dibutylphenyl, biphenyl, biphenylmethyl, biphenylethyl, naphthyl, naphthylmethyl, and naphthylethyl groups.

Examples of the cycloalkyl group include cyclopropyl, cyclobutyl, cyclopentyl, and cyclohexyl groups. Examples of the cycloalkenyl group include cyclopropenyl, cyclobutenyl, cyclopentenyl, and cyclohexenyl groups.

The hydrocarbon group is preferably an alkyl group or an alkenyl group, more preferably an alkyl group. The number of carbon atoms of the hydrocarbon group is preferably 2 to 20, more preferably 2 to 15, still more preferably 2 to 10, particularly preferably 2 to 5.

Z is preferably a hydrogen atom or a methyl group.

A represents a C1-C10 alkylene group optionally having a substituent. The substituent is preferably at least one hydrophilic group selected from the group consisting of a hydroxyl group, a carboxy group, a sulfonic acid group, a phosphoric acid group, a secondary or tertiary amino group, and groups of salts thereof.

In the polyalkylene glycol represented by (AO)q, the q oxyalkylene groups each represented by AO may be the same as each other or different from each other.

The number of carbon atoms of the alkylene group for A is preferably 2 to 10, more preferably 2 to 4.

Examples of the oxyalkylene group represented by AO include oxyethylene, oxypropylene, oxybutylene, oxyisobutylene, oxy-2,3-butylene, oxystyrene, and C2-C10 oxyalkylene groups. A C2-C4 oxyalkylene group such as an oxyethylene, oxypropylene, or oxybutylene group is more preferred, and an oxyethylene or oxypropylene group is still more preferred. The oxyalkylene group represented by AO is not limited to groups formed by an addition reaction of an alkylene oxide. When the polyalkylene glycol is an adduct of two or more oxyalkylene groups, the oxyalkylene groups may be added in random, block, alternating, or another form. The oxyalkylene groups in the polyalkylene glycol preferably include an oxyethylene group as an essential component. More preferably, 50 mol% or more of the oxyalkylene groups are oxyethylene groups, and still more preferably, 90 mol% or more of the oxyalkylene groups are oxyethylene groups.

The symbol q represents the average number of moles of AO added and is a number from 1 to 200. The symbol q is preferably 1 to 180, more preferably 2 to 150, still more preferably 2 to 100, further more preferably 2 to 80, particularly preferably 2 to 50, most preferably 20 to 30.

In one embodiment, q is preferably 2 to 180, more preferably 3 to 150, still more preferably 4 to 100, further more preferably 5 to 80, particularly preferably 9 to 50.

The symbol n represents a number from 0 to 4, and m represents 0 or 1.

The symbol n is preferably 0 to 3, more preferably 0 to 2, still more preferably 0. The symbol m is more preferably 1.

The structural unit (b) having a polyalkylene glycol chain is formed, for example, by radical polymerization of a monomer having a polyalkylene glycol chain.

Specific preferred examples of the monomer having a polyalkylene glycol chain include (poly)alkylene glycol monomers including: polyalkylene glycol mono(meth)acrylates such as (poly)ethylene glycol mono(meth)acrylate and (poly)propylene glycol mono(meth)acrylate; alkoxy polyalkylene glycol mono(meth)acrylates such as methoxy(poly) ethylene glycol mono(meth)acrylate and methoxy(poly)propylene glycol mono(meth)acrylate; and compounds in which 10 to 100 moles of oxyalkylene groups are added to any of vinyl alcohol, (meth)allyl alcohol, 3-methyl-3-buten-1-ol (isoprenol), 3-methyl-2-buten-1-ol, 2-methyl-3-buten-2-ol, 2-methyl-2-buten-1-ol, and 2-methyl-3-buten-1-ol. In particular, (poly)ethylene glycol mono(meth)acrylate and methoxy(poly)ethylene glycol mono(meth)acrylate are preferred.

The amount of the structural unit (b) having a polyalkylene glycol chain in the copolymer of the present disclosure is preferably 5% by mass or more and 75% by mass or less, more preferably 20% by mass or more and 70% by mass or less, still more preferably 30% by mass or more and 70% by mass or less, particularly preferably 40% by mass or more and

65% by mass or less, most preferably 45% by mass or more and 60% by mass or less, based on 100% by mass of all structural units derived from the monomers constituting the copolymer of the present disclosure.

In one embodiment, the amount of the structural unit (b) based on 100% by mass of all structural units is preferably 10% by mass or more and 75% by mass or less, more preferably 15% by mass or more and 70% by mass or less, still more preferably 17% by mass or more and 65% by mass or less.

Such an amount falling within the above ranges allows the copolymer to have hydrophilic sites in an appropriate proportion. Thus, the detergent additive in the present disclosure tends to have improved soil release properties and anti-redeposition properties.

<Structural unit (c) derived from hydrophobic monomer>

The hydrophobic monomer in the present disclosure constituting the structural unit (c) derived from a hydrophobic monomer in the present disclosure is not limited as long as a homopolymer obtained by homopolymerization of the hydrophobic monomer has a solubility parameter of 13 or less.

The solubility parameter is a value calculated by the method described in "POLYMER ENGINEERING AND SCIENCE" (Vol. 14, No. 2, pp. 147-154, 1974).

The method is outlined below. The solubility parameter (δ) $(cal/cm^3)^{1/2}$ of a homopolymer is calculated by the following calculation method based on the evaporation energy (Δei) and molar volume (Δvi) of the structural unit forming the polymer.

$$\delta = (\Delta ei/\Delta vi)^{1/2} (cal/cm^3)^{1/2}$$

When the solubility parameter of the homopolymer obtained by homopolymerization of the hydrophobic monomer in the present disclosure is 13 or less, the copolymer of the present invention has sufficient hydrophobicity and excellently adsorbs to hydrophobic textiles. The solubility parameter is preferably 12 or less, more preferably 11 or less. The solubility parameter is usually 5 or more.

The hydrophobic monomer in the present disclosure is not limited as long as the homopolymer thereof has a solubility parameter of 13 or less, and is preferably a monomer having an ethylenically unsaturated group and a C1-C30 alkyl group.

Examples of the hydrophobic monomer include esters of unsaturated carboxylic acids such as (meth)acrylic acid and C1-C30 alcohols optionally having a substituent; aromatic vinyl monomers such as styrene; olefin monomers such as ethylene and propylene; esters of unsaturated alcohols and C3-C8 carboxylic acids such as vinyl acetate; vinyl halides such as vinyl chloride; alkyl vinyl ethers such as methyl vinyl ether and ethyl vinyl ether; cyclic vinyl monomers such as N-vinylpyrrolidone; and acrylonitrile.

The substituent that is optionally contained in the alcohols may be any substituent other than a hydroxy group, an oxyalkylene group, a carboxy group, a sulfonic acid group, a phosphoric acid group, an amino group, and groups of salts thereof. Examples of the substituent include halogen atoms.

The number of carbon atoms of the alcohol is preferably 2 to 22, more preferably 2 to 16, still more preferably 4 to 8.

Preferred examples of the C1-C30 alcohols include C1-C30 alkyl alcohols and C6-C30 aryl alcohols.

Examples of the C1-C30 alkyl alcohols include methanol, ethanol, propanol, butanol, pentyl alcohol, hexyl alcohol, heptyl alcohol, octyl alcohol, nonyl alcohol, decyl alcohol, undecyl alcohol, dodecyl alcohol (lauryl alcohol), tridecyl alcohol, tetradecyl alcohol, pentadecyl alcohol, hexadecyl alcohol, heptadecyl alcohol, octadecyl alcohol, nonadecyl alcohol, and icosyl alcohol.

Preferred examples of the C6-C30 aryl alcohols include phenol, benzyl alcohol, methylphenyl alcohol (o-cresol, m-cresol, and p-cresol), creosol, ethylphenyl alcohol, propylphenyl alcohol, butylphenyl alcohol, butylmethylphenyl alcohol, dimethylphenyl alcohol, diethylphenyl alcohol, dibutylphenyl alcohol, hydroxybiphenyl, 4-hydroxymethylbiphenyl, 3-hydroxymethylbiphenyl, 4-hydroxyethylbiphenyl, 3-hydroxyethylbiphenyl, naphthol, 1-hydroxymethylnaphthalene, 1-hydroxyethylnaphthalene, 2-hydroxymethylnaphthalene, and 2-hydroxyethylnaphthalene.

The hydrophobic monomer is preferably a compound represented by the following formula (5):

[Chem. 6]

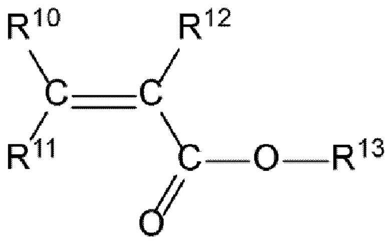

Formula (5)

wherein $R^{10}$, $R^{11}$, and $R^{12}$ are the same as or different from each other and each represent a hydrogen atom or a C1-C3 alkyl group; and $R^{13}$ represents a C1-C30 hydrocarbon group.

In other words, the structural unit (c) derived from a hydrophobic monomer in the present disclosure is preferably a structural unit represented by the following formula (6):

[Chem. 7]

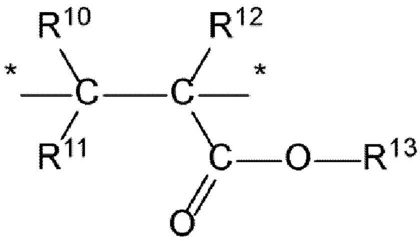

Formula (6)

wherein $R^{10}$ to $R^{13}$ are the same as those in the formula (5), where each of asterisks represents an atom in another structural unit to which the structural unit represented by the formula (6) is bonded, with the another structural unit being the same as or different from the structural unit represented by the formula (6).

When the amino group-containing copolymer of the present disclosure contains a structural unit represented by the formula (6), the structural unit may be obtained by polymerization using a compound represented by the formula (5) or may be obtained by other methods.

The alkyl group for $R^{10}$, $R^{11}$, and $R^{12}$ is preferably a methyl group, an ethyl group, or a propyl group, more preferably a methyl group or an ethyl group, still more preferably a methyl group.

$R^{10}$, $R^{11}$ and $R^{12}$ are the same as or different from each other and are each preferably a hydrogen atom or a methyl group. More preferably, $R^{10}$ and $R^{11}$ are each a hydrogen atom and $R^{12}$ is a hydrogen atom or a methyl group.

The number of carbon atoms of the hydrocarbon group for $R^{13}$ is preferably 1 to 22. It is more preferably 2 to 16, still more preferably 2 to 12, particularly preferably 4 to 12, most preferably 4 to 8.

Non-limiting examples of the hydrocarbon group for $R^{13}$ include chain hydrocarbon groups such as an alkyl group, an alkenyl group, and an alkynyl group, and cyclic hydrocarbon groups such as an aryl group, a cycloalkyl group, and a cycloalkenyl group. The hydrocarbon group may have a branch. When the hydrocarbon group has a branch, the number of carbon atoms thereof refers to a total number of carbon atoms in the main chain and branches.

In one embodiment, the hydrocarbon group for $R^{13}$ may or may not have an aryl group. In a preferred embodiment of the present invention, the hydrocarbon group for $R^{13}$ does not contain an aryl group.

The number of carbon atoms of the alkyl group for $R^{13}$ is preferably 2 to 22, more preferably 2 to 16, still more preferably 2 to 12. It is most preferably 4 to 8.

The number of carbon atoms of the aryl group for $R^{13}$ is preferably 6 to 12, more preferably 6 to 10, still more preferably 6 to 8.

Examples of the alkyl group for $R^{13}$ include methyl, ethyl, propyl, isopropyl, butyl, isobutyl, hexyl, heptyl, 2-ethylhexyl, octyl, nonyl, decyl, dodecyl, stearyl, and icosyl groups.

Examples of the alkenyl group for $R^{13}$ include vinyl, allyl, 1-butenyl, 2-butenyl, pentenyl, hexenyl, heptenyl, octenyl, nonenyl, decenyl, dodecenyl, octadecenyl, and icosenyl groups.

Examples of the alkynyl group for $R^7$ include ethynyl, 1-propynyl, 2-propynyl, butynyl, pentynyl, hexynyl, heptynyl, octynyl, nonynyl, decynyl, dodecynyl, octadecynyl, and icosynyl groups.

Examples of the aryl group for $R^{13}$ include phenyl, benzyl, methylphenyl, 1-methoxy-4-methylphenyl, ethylphenyl, propylphenyl, butylphenyl, butylmethylphenyl, dimethylphenyl, diethylphenyl, dibutylphenyl, 2-(2-methylphenyl)ethyl, 2-(3-methylphenyl)ethyl, 2-(4-methylphenyl)ethyl, 2-(4-propylphenyl)ethyl, biphenyl, biphenylmethyl, biphenylethyl, naphthyl, naphthylmethyl, and naphthylethyl groups.

Examples of the cycloalkyl group for $R^{13}$ include cyclopropyl, cyclobutyl, cyclopentyl, and cyclohexyl groups.

Examples of the cycloalkenyl group include cyclopropenyl, cyclobutenyl, cyclopentenyl, and cyclohexenyl

groups.

The hydrocarbon group for $R^{13}$ is preferably an alkyl group or an aryl group, more preferably an alkyl group.

The hydrophobic monomer is preferably an alkyl (meth)acrylate or an aryl (meth)acrylate, more preferably an alkyl (meth)acrylate.

Examples of the alkyl (meth)acrylate include methyl (meth)acrylate, ethyl (meth)acrylate, n-propyl (meth) acrylate, isopropyl (meth)acrylate, n-butyl (meth)acrylate, isobutyl (meth)acrylate, tert-butyl (meth)acrylate, sec-butyl (meth)acrylate, 2-ethylhexyl (meth)acrylate, cyclohexyl (meth)acrylate, n-octyl (meth)acrylate, nonyl (meth)acrylate, decyl (meth)acrylate, dodecyl (meth)acrylate, stearyl (meth)acrylate, and icosyl (meth)acrylate. Of these, methyl (meth) acrylate, ethyl (meth)acrylate, n-propyl (meth)acrylate, isopropyl (meth)acrylate, n-butyl (meth)acrylate, isobutyl (meth) acrylate, tert-butyl (meth)acrylate, sec-butyl (meth)acrylate, 2-ethylhexyl (meth)acrylate, cyclohexyl (meth)acrylate, n-octyl (meth)acrylate, and dodecyl (meth)acrylate are preferred, and ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth) acrylate, 2-ethylhexyl (meth)acrylate, cyclohexyl (meth)acrylate, and dodecyl (meth)acrylate are more preferred.

Examples of the aryl (meth)acrylate include phenyl (meth)acrylate, benzyl (meth)acrylate, 2-ethylphenyl (meth) acrylate, propylphenyl (meth)acrylate, butylphenyl (meth)acrylate, pentylphenyl (meth)acrylate, hexylphenyl (meth) acrylate, butylmethylphenyl (meth)acrylate, dimethylphenyl (meth)acrylate, diethylphenyl (meth)acrylate, dibutylphenyl (meth)acrylate, 2-phenylethyl (meth)acrylate, 4-methylphenyl (meth)acrylate, 4-methylbenzyl (meth)acrylate, 1-methoxy-4-methylphenyl (meth)acrylate, 2-(2-methylphenyl)ethyl (meth)acrylate, 2-(3-methylphenyl)ethyl (meth)acrylate, 2-(4-methylphenyl)ethyl (meth)acrylate, 2-(4-propylphenyl)ethyl (meth)acrylate, biphenyl methyl (meth)acrylate, biphenyl ethyl (meth)acrylate, naphthyl (meth)acrylate, naphthyl methyl (meth)acrylate, and naphthyl ethyl (meth)acrylate.

Of these, phenyl (meth)acrylate and benzyl (meth)acrylate are preferred.

The amount of the structural unit (c) derived from a hydrophobic monomer in the copolymer of the present disclosure is preferably 5% by mass or more and 70% by mass or less, more preferably 10% by mass or more and 60% by mass or less, still more preferably 15% by mass or more and 50% by mass or less, most preferably 20% by mass or more and 45% by mass or less, based on 100% by mass of all structural units derived from the monomers constituting the copolymer of the present disclosure. Such an amount falling within the above ranges allows the copolymer to have hydrophobic sites in an appropriate proportion. Thus, the detergent additive in the present disclosure tends to have improved soil release properties, anti-redeposition properties, and antibacterial performance.

In one embodiment, the amount of the structural unit (c) based on 100% by mass of all structural units may be 5 to 40% by weight. In a preferred embodiment, it is 5 to 35% by weight.

<Structural unit (d) derived from unsaturated carboxylic acid monomer>

The structural unit (d) derived from an unsaturated carboxylic acid monomer in the present disclosure is not limited as long as it is a structural unit derived from a monomer having a carboxy group and an ethylenically unsaturated hydrocarbon group (unsaturated group). The structural unit (d) is preferably a structural unit represented by the following formula (7):

[Chem. 8]

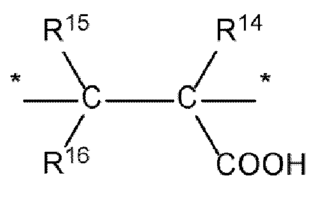

Formula (7)

wherein $R^{14}$ is at least one selected from a hydrogen atom, a methyl group, and a $-CH_2COOH$ group; and $R^{15}$ and $R^{16}$ are the same as or different from each other and are each at least one selected from a hydrogen atom, a methyl group, an ethyl group, a carboxy group, and a $-CH_2COOH$ group.

In a preferred embodiment of the formula (7), $R^{14}$ is at least one selected from a hydrogen atom and a methyl group and $R^{15}$ and $R^{16}$ are the same as or different from each other and are each at least one selected from a hydrogen atom and a carboxy group.

In a more preferred embodiment, $R^{14}$ is at least one selected from a hydrogen atom and a methyl group and $R^{15}$ and $R^{16}$ are each a hydrogen atom.

Examples of the unsaturated carboxylic acid monomer as a precursor of the structural unit (d) derived from an unsaturated carboxylic acid monomer before the polymerization reaction include unsaturated carboxylic acid monomers such as (meth)acrylic acid, crotonic acid, tiglic acid, 3-methylcrotonic acid, 2-methyl-2-pentenoic acid, and the like, and

monovalent metal salts, divalent metal salts, ammonium salts, and organic amine salts thereof; and unsaturated dicarboxylic acid monomers such as maleic acid, itaconic acid, mesaconic acid, citraconic acid, fumaric acid, and the like, monovalent metal salts, divalent metal salts, ammonium salts, and organic amine salts thereof, and anhydrides and half esters thereof. Of these, a (meth)acrylic acid, maleic acid, and salts thereof are preferred, and a (meth)acrylic acid is more preferred.

The amount of the structural unit (d) derived from an unsaturated carboxylic acid monomer in the copolymer of the present disclosure is preferably 1% by mass or more and 20% by mass or less, more preferably 1% by mass or more and 10% by mass or less, still more preferably 1% by mass or more and 5% by mass or less, based on 100% by mass of all structural units derived from the monomers constituting the copolymer of the present disclosure. Such an amount falling within the above ranges allows the copolymer to have hydrophobic sites and hydrophilic sites in an appropriate proportion. Thus, the detergent additive in the present disclosure tends to have improved soil release properties and anti-redeposition properties.

<Structural unit (e) derived from different monomer>

The amino group-containing copolymer of the present disclosure may have a structural unit (e) derived from a different monomer in addition to the structural unit (a) derived from an amino group-containing monomer, the structural unit (b) derived from a monomer having a polyalkylene glycol chain, the structural unit (c) derived from a hydrophobic monomer, and the structural unit (d) derived from an unsaturated carboxylic acid monomer.

Non-limiting examples of the different monomer include sulfonic acid group-containing monomers such as styrenesulfonic acid, 2-acrylamido-2-methylpropanesulfonic acid, and 3-allyloxy-2-hydroxy-1-propanesulfonic acid, and salts thereof, and phosphoric acid group-containing monomers such as 2-methacryloyloxyethyl acid phosphate.

The amount of the structural unit derived from a different monomer in the copolymer of the present disclosure is preferably 10% by mass or less, more preferably 5% by mass or less, particularly preferably 3% by mass or less, most preferably 1% by mass or less, based on 100% by mass of all structural units derived from the monomers constituting the copolymer of the present disclosure.

<Properties and the like of copolymer of the present disclosure>

The amino group-containing copolymer of the present disclosure preferably has a weight average molecular weight (Mw) of 4,000 or more and 500,000 or less, more preferably 6,000 or more and 400,000 or less, still more preferably 10,000 or more and 300,000 or less. Further, the Mw is preferably 10,000 or more and 200,000 or less, more preferably 10,000 or more and 100,000 or less, still more preferably 12,000 or more and 50,000 or less, particularly preferably 15,000 or more and 40,000 or less, most preferably 18,000 or more and 30,000 or less. Such a Mw falling within the above ranges tends to allow the copolymer of the present disclosure to have more improved soil release properties.

[Method for producing amino group-containing copolymer of the present disclosure]

The amino group-containing copolymer of the present disclosure may be produced by any method, and can be produced by polymerizing the monomer components. Specific and preferred examples of the monomer components and the preferred proportions of the monomers are as described above.

The present invention also encompasses the method for producing the amino group-containing copolymer of the present disclosure.

The method for producing the amino group-containing copolymer includes, for example, polymerizing an amino group-containing monomer or a precursor thereof, a monomer having a polyalkylene glycol chain or a precursor thereof, a hydrophobic group monomer or a precursor thereof, and an unsaturated carboxylic acid monomer (hereinafter referred to as a polymerization step). Examples of a method for initiating polymerization of the monomer components in the polymerization step include a method of adding a polymerization initiator, a method of irradiating with UV light, a method of applying heat, and a method of irradiating with light in the presence of a photopolymerization initiator. In particular, a polymerization initiator is preferably used.

Examples of the polymerization initiator include persulfates such as sodium persulfate, potassium persulfate, and ammonium persulfate; azo compounds such as 2,2'-azobis(2,4-dimethylvaleronitrile), dimethyl 2,2'-azobis(2-methylpropionate), 2,2'-azobis(isobutyronitrile), and 2,2'-azobis(2-methylpropionamidine) dihydrochloride; organic peroxides such as benzoyl peroxide, lauroyl peroxide, di-t-butyl peroxide, and cumene hydroperoxide; and redox initiators that generate radicals by combining an oxidizing agent and a reducing agent, such as a combination of ascorbic acid and hydrogen peroxide and a combination of a persulfate and a metal salt. Of these, persulfates and azo compounds are preferred, as they tend to reduce the amount of residual monomer. Azo compounds are more preferred. These polymerization initiators may be used alone or in the form of a mixture of two or more of these.

The amount of the polymerization initiator used is preferably 0.01% by mass or more and 10% by mass or less, more preferably 0.02% by mass or more and 8% by mass or less, still more preferably 0.03% by mass or more and 7% by mass or less, most preferably 0.04% by mass or more and 4% by mass or less, based on the total amount of monomers used constituting the structural units used.

In the polymerization step, a chain transfer agent may be used as a molecular weight regulator for the polymer, if necessary. Examples of the chain transfer agent include mercaptocarboxylic acids such as thioglycolic acid (mercaptoacetic acid), 3-mercaptopropionic acid, 2-mercaptopropionic acid (thiolactic acid), 4-mercaptobutanoic acid, thiomalic acid, and salts thereof; mercaptoethanol, thioglycerol, 2-mercaptoethanesulfonic acid, and the like; halides such as carbon tetrachloride, methylene chloride, bromoform, and bromotrichloroethane; secondary alcohols such as isopropanol and glycerol; phosphorous acid, hypophosphorous acid, hypophosphites, and hydrates thereof; and hydrogen sulfite (salt) and compounds capable of generating hydrogen sulfite (salt) (bisulfurous acid (salt), pyrosulfurous acid (salt), dithionous acid (salt), sulfurous acid (salt), etc.). Of these, compounds having a mercapto group are preferred, and mercapto group-containing compounds having a carboxy group are more preferred.

The amount of the chain transfer agent used in the production of the copolymer of the present disclosure is preferably 0.1 mol% or more and 20 mol% or less, more preferably 0.2 mol% or more and 15 mol% or less, still more preferably 0.3 mol% or more and 10 mol% or less, most preferably 0.5 mol% or more and 5 mol% or less, relative to 100 mol% of the total amount of monomers used constituting the structural units.

The solvent used in the polymerization can be selected depending on needs from those capable of dissolving the monomer components, polymerization initiator, chain transfer agent, to be used, and the produced copolymer. The solvent may be any solvent, and is preferably water; a C1-C8 alcohol such as ethanol, **1-**propanol, 2-propanol, 1-butanol, or phenoxyethanol; a glycol such as ethylene glycol, propylene glycol, butylene glycol, or hexylene glycol; or a glycol ether such as diethylene glycol monoethyl ether, diethylene glycol monobutyl ether, or propylene glycol monomethyl ether. Of these, water, ethanol, ethylene glycol, propylene glycol, diethylene glycol monobutyl ether, and propylene glycol monomethyl ether are preferred, and a mixture of two or more of these may also be used.

In the polymerization step, the polymerization temperature is preferably 40°C or higher and 150°C or lower. The polymerization temperature is more preferably 45°C or higher, still more preferably 50°C or higher. The polymerization temperature is more preferably 100°C or lower, still more preferably 90°C or lower.

In the polymerization step, the monomer components, the polymerization initiator, and the chain transfer agent may be introduced into a reaction vessel by any method. Examples thereof include a method of introducing the entire amount of these into the reaction vessel all at once at the beginning, a method of introducing the entire amount of these into the reaction vessel in portions or continuously, and a method of introducing a portion of these into the reaction vessel at the beginning followed by introducing the rest into the reaction vessel in portions or continuously. A preferred method is a method of introducing any of the solvents described later at the beginning followed by continuously introducing the monomer components, the polymerization initiator, and the chain transfer agent.

The monomer components may be neutralized with an organic acid such as acetic acid or propionic acid, or a mineral acid such as hydrochloric acid, sulfuric acid, or nitric acid before polymerization.

The copolymer obtained by the polymerization can be used as is as a detergent additive such as an additive for liquid detergents. The copolymer may be further neutralized with an alkaline substance before use, if necessary. The alkaline substance used may be a hydroxide of a monovalent metal or a divalent metal, an inorganic salt such as a carbonate, ammonia, or an organic amine. After the reaction is completed, the concentration of the copolymer may be adjusted, if necessary.

[Applications of amino group-containing copolymer of the present disclosure]

The amino group-containing copolymer of the present disclosure may be used for soil release agents, antibacterial agents, and anti-redeposition agents.

Soil release agents, antimicrobial agents, and anti-redeposition agents can be used as additives for detergents. For example, soil release agents, antimicrobial agents, and anti-redeposition agents are used in detergents for textiles and hard surfaces. The detergents herein include: household detergents including laundry detergents, kitchen detergents, and residential detergents; and industrial detergents including detergents for textile industry.

The present invention also encompasses a method for using the amino group-containing copolymer for a soil release agent, an antibacterial agent, or an anti-redeposition agent.

In the method, the amino group-containing copolymer is preferably brought into contact with an object to be washed.

The present invention also encompasses a method for producing a soil release agent. The method includes mixing the amino group-containing copolymer with a surfactant.

[Soil release agent of the present disclosure]

The soil release agent of the present disclosure is a soil release agent containing the amino group-containing copolymer of the present disclosure. The soil release properties refer to detergency performance that can be measured by the method described in the EXAMPLES below. The soil release agent of the present disclosure is effective under both immersion conditions and washing conditions.
The soil release agent of the present disclosure may consist of the amino group-containing copolymer of the present disclosure alone, or may contain, in addition to the amino group-containing copolymer of the present disclosure, an additive that is typically used in detergents, without any restrictions. The soil release agent of the present disclosure preferably contains 0.1 to 100% by mass of the amino group-containing copolymer. Examples of the additive include surfactants such as anionic surfactants, nonionic surfactants, cationic surfactants, and amphoteric surfactants.
Examples of the additive other than these surfactants include anti-redeposition agents such as sodium carboxymethylcellulose, color transfer inhibitors, softeners, alkaline substances for adjusting pH, fragrances, solubilizing agents, fluorescent agents, colorants, foaming agents, foam stabilizers, polishing agents, disinfectants, bleaching agents, bleaching aids, enzymes, dyes, and solvents. In the case of a powder detergent composition, zeolite is preferably added.

[Antibacterial agent in the present disclosure]

The antibacterial agent in the present disclosure contains the amino group-containing copolymer and exhibits excellent antibacterial performance. The antibacterial performance refers to the antibacterial performance of a substrate such as a textile treated with an antibacterial agent, which can be evaluated by the method described in the EXAMPLES below. The antibacterial agent in the present disclosure preferably contains the amino group-containing copolymer in an amount of 0.1 to 100% by mass. The antibacterial performance includes bactericidal (kill microorganisms), bacteriostatic (suppress the growth of microorganisms), sterilizing, disinfecting, bacteria-controlling, bacteria-removing, preservative, and antifungal performances. The antibacterial performance targets microorganisms including bacteria and fungi.
Examples of the bacteria include gram-negative bacteria such as *Escherichia coli, Pseudomonas aeruginosa, Salmonella, Moraxella,* and *Legionella;* and gram-positive bacteria such as *Staphylococcus aureus* and *Clostridium.* Examples of the fungi include yeasts such as *Candida, Rhodotorula,* and baker's yeast; and molds such as red mold and black mold.
The reason why the antibacterial agent in the present disclosure exhibits antibacterial properties when containing the amino group-containing copolymer is presumed to be as follows. When the antibacterial agent in the present invention is applied to microorganisms, the cationic groups each derived from the structural unit represented by the formula (1) in the amino group-containing copolymer adsorb to the surfaces of the microorganisms having a negative charge. Furthermore, the hydrophobic groups in the amino group-containing copolymer have affinity with the cell membrane portions and interact with the cell membranes, thereby breaking the interactions between the lipids and the like of the cell membranes and/or inhibiting the functions of proteins and the like bound to the membranes. This presumably causes breakage of the cells and/or inhibition of the physiological activity of the cells, so that the microorganisms are killed.
The antibacterial agent in the present disclosure may consist of the amino group-containing copolymer of the present disclosure alone, or may contain, in addition to the amino group-containing copolymer of the present disclosure, an additive that is used in a typical detergent composition, without any restrictions. The antibacterial agent in the present disclosure preferably contains the amino group-containing copolymer in an amount of 0.1 to 100% by mass. Examples of the additive include surfactants such as anionic surfactants, nonionic surfactants, cationic surfactants, and amphoteric surfactants.
Examples of the additive other than these surfactants include other antibacterial agents, anti-redeposition agents such as sodium carboxymethylcellulose, color transfer inhibitors, softeners, alkaline substances for adjusting pH, fragrances, solubilizing agents, fluorescent agents, colorants, foaming agents, foam stabilizers, polishing agents, disinfectants, bleaching agents, bleaching aids, enzymes, dyes, and solvents. In the case of a powder detergent composition, zeolite is preferably added.

[Anti-redeposition agent in the present disclosure]

The anti-redeposition agent in the present disclosure contains the amino group-containing copolymer and exhibits excellent anti-redeposition properties. The anti-redeposition agent in the present disclosure preferably contains the amino group-containing copolymer in an amount of 0.1 to 100% by mass.
The anti-redeposition agent in the present disclosure may be used by adding to a detergent composition. The detergent composition may be in any form such as a liquid form, a solid form, or a powder form.
The detergent composition in the present disclosure may contain various components used in detergent

compositions in addition to the soil release agent, the antimicrobial agent, or the anti-redeposition agent. The detergent composition may contain a surfactant and a detergent additive that is typically used in detergent compositions.

The surfactant may be any of anionic surfactants, nonionic surfactants, cationic surfactants, and amphoteric surfactants. The surfactant may include one or two or more of these.

Suitable examples of the anionic surfactants include alkylbenzenesulfonates, alkyl ether sulfates, alkenyl ether sulfates, alkyl sulfates, alkenyl sulfates, α-olefinsulfonates, α-sulfofatty acids or ester salts thereof, alkanesulfonates, saturated fatty acid salts, unsaturated fatty acid salts, alkyl ether carboxylates, alkenyl ether carboxylates, amino acid surfactants, N-acylamino acid surfactants, alkyl phosphate esters or salts thereof, and alkenyl phosphate esters or salts thereof. The alkyl and alkenyl groups in these anionic surfactants may each have an alkyl group such as a methyl group as a branch.

Examples of the nonionic surfactants include polyoxyalkylene alkyl ethers, polyoxyalkylene alkenyl ethers, polyoxyethylene alkylphenyl ethers, higher fatty acid alkanolamides or alkylene oxide adducts thereof, sucrose fatty acid esters, alkyl glycoxides, fatty acid glycerol monoesters, and alkylamine oxides. The alkyl and alkenyl groups in these nonionic surfactants may each have an alkyl group such as a methyl group as a branch.

Examples of the cationic surfactants include quaternary ammonium salts. Examples of the amphoteric surfactants include carboxy amphoteric surfactants and sulfobetaine amphoteric surfactants. The alkyl and alkenyl groups in these cationic surfactants and amphoteric surfactants may each have an alkyl group such as a methyl group as a branch.

The amount of the surfactant is preferably 10 to 60% by mass, more preferably 15 to 50% by mass, still more preferably 20 to 45% by mass, particularly preferably 25 to 40% by mass, based on the total amount of the detergent composition. When the amount of the surfactant is 10 to 60% by mass based on the total amount of the detergent composition, both detergency and economical efficiency tend to be achieved.

## EXAMPLES

The present invention is described in more detail below with reference to examples, but the present invention is not limited to these examples. Unless otherwise specified, "%" means "% by mass."

<Measurement of weight average molecular weight of copolymer>

The weight average molecular weight (Mw) of the copolymer was measured by gel permeation chromatography (GPC).

The following describes the measurement conditions and the apparatus.

Apparatus: EcoSEC HLC-8320GPC available from Tosoh Corporation
Detector: Differential refractive index (RI) detector
Column: TSKgel α-M, TSKgel α-2500, available from Tosoh Corporation
Column temperature: 40°C
Flow rate: 0.8 mL/min
Injection volume: 20 μL (prepared eluent with a sample concentration of 0.5 wt%)
Calibration curve: Polyethylene glycol, Mw = 194, 410, 615, 1020, 1450, 3860, 8160, 16100, 21160, 49930, 67600, 96100, 205500, 542500, 942000, available from GL Sciences Inc.
Calibration curve order: 3
GPC software: EcoSEC-WS available from Tosoh Corporation
Eluent: 0.5 M acetic acid + 0.2 M Na nitrate/acetonitrile = 50/50 (v/v)

<Evaluation 1 of soil release properties>

The copolymers produced in Production Examples 2, 4, 6, 8 to 17, and 19 were evaluated for soil release properties by the following method.

(Method of pretreatment of fabric)

(1)-1: Preparation of hard mother liquor

First, 8.39 g of calcium chloride dihydrate and 2.9 g of magnesium chloride hexahydrate were weighed into a beaker, and ion-exchanged water was added thereto to prepare 1,000 g of a hard mother liquor.

(1)-2: Preparation of hard water

First, 1.54 g of sodium bicarbonate, 10 g of 0.1 N hydrogen chloride, and 200 g of the hard mother liquor prepared in (1)-1 were placed in a beaker and diluted with ion-exchanged water to prepare 20,000 g of hard water.

(1)-3

Polyester taffeta fabric (polyester textile available from Shikisensha Co., Ltd.) was cut into pieces with a size of 5 × 5 cm. The hard water prepared in (1)-2 was used to prepare 55 g of a 33 ppm aqueous solution of any of the copolymers obtained in the EXAMPLES. To the solution were added 2.7 g of the pieces of fabric, followed by stirring for 10 minutes with a roller shaker. After the stirring, the pieces of fabric were rinsed for three minutes, dehydrated, and air-dried for one day.

(Preparation of soiled fabric)

A soiling oil-containing liquid was prepared by mixing 61.5 g of olive oil, 37 g of oleic acid, 1 g of iron (III) oxide, and 0.5 g of oil red. A 15-μL portion of the soiling oil-containing liquid was dropped onto the polymer-treated pieces of fabric obtained by the method of pretreatment 1, and the pieces of fabric were left to stand at 40°C for one hour to prepare pieces of soiled fabric.

(Evaluation of detergency)

(2)-1: Preparation of aqueous surfactant solution

Emulgen 108 (Kao Corporation) in an amount of 10 g was weighed into a beaker and ion-exchanged water was added thereto to prepare 100 g of a 10% surfactant solution.

(2)-2: Detergency test

A tergotometer was set to 25°C, 498.8 g of the hard water prepared in (1)-2 and 0.85 g of the surfactant solution prepared in (1)-3 were placed in the pot, and a 1% aqueous copolymer solution was added thereto so that the concentration of the copolymer in the pot was 7.3 ppm, followed by mixing. Five pieces of soiled fabric whose Z values had been previously measured using a spectrophotometer (SE 6000 available from Nippon Denshoku Industries Co., Ltd.) and pieces of bath ratio adjustment fabric were placed in a pot in a total of 16.7 g, and washed by stirring at 120 rpm for 10 minutes. The water in the pot was discarded, and the pieces of fabric were rinsed once for three minutes, dehydrated, and air-dried for one day.

After the air drying, the Z values of the pieces of soiled fabric after washing were measured again using a color difference meter, and the detergent efficiency was calculated by the following formula.

$$\text{Detergent efficiency (\%)} = ((Zs - Zw)/(Zs - Zo)) \times 100$$

Zs represents the Z value of the piece of soiled fabric before washing, Zw represents the Z value of the piece of soiled fabric after washing, and Zo represents the Z value of a piece of non-soiled white fabric.

Based on the obtained detergent efficiency, the detergency was evaluated according to the following criteria. The results are shown in Table 5.

++: The detergent efficiency was 88% or higher.
+: The detergent efficiency was 86% or higher and lower than 88%.
-: The detergent efficiency was lower than 86%.

<Evaluation of anti-redeposition properties>

(1) As a surfactant solution, Emulgen 108 (PAE available from Kao Corporation) was diluted with ion-exchanged water to prepare a 10% surfactant solution.
(2) Preparation of hard mother liquor
First, 5.90 g of calcium chloride dihydrate and 2.72 g of magnesium chloride hexahydrate were weighed into a beaker, and ion-exchanged water was added thereto to prepare 100 g of a hard mother liquor.
(3) Preparation of aqueous sodium bicarbonate solution

First, 1.54 g of sodium bicarbonate and 10 g of 0.1 N hydrogen chloride were placed in a beaker and diluted with ion-exchanged water to prepare 100 g of an aqueous solution.

(4) Measurement of color of white fabric

The whiteness of the pieces of white fabric used in the evaluation of anti-redeposition properties was determined by measuring the reflectance using a color difference meter (SE 6000 available from Nippon Denshoku Industries Co., Ltd.) before the evaluation.

(5) Evaluation of detergency

A tergotometer was set to 25°C, and 891.3 g of ion-exchanged water, 1.2 g of the hard mother liquor, 4.5 g of the aqueous sodium bicarbonate solution, 2.25 g of the aqueous surfactant solution, and 0.75 g of an aqueous polymer solution having a solid content of 1% were placed in the pot. The contents were stirred at 120 rpm for three minutes. Thereafter, 0.05 g of carbon black (Carbon Black #10 available from Mitsubishi Chemical Corporation) was added, and five pieces of cotton knit (cotton fabric available from Dyeing Test Materials Co., Ltd.) or five pieces of Style 730 and pieces of bath ratio adjustment fabric (white cotton fabric) were added in a total of 30 g. The contents were stirred at 120 rpm for 10 minutes for washing. The water in the pot was discarded, and the pieces of white fabric were rinsed twice and dehydrated.

Each piece of white fabric was covered with a pressing cloth and dried by ironing out the wrinkles. Then, the whiteness of the piece of white cloth was then determined again by measuring the reflectance using the color difference meter.

From the above measurement results, the anti-redeposition rate was calculated using the following equation.

$$\text{Anti-redeposition rate (\%)} = [(\text{Whiteness after washing})/(\text{Whiteness of original white cloth})] \times 100$$

The anti-redeposition properties were evaluated according to the following criteria.

Anti-redeposition properties for cotton

An anti-redeposition rate higher than that in the case where no polymer was added by +1.0% or more: ++

An anti-redeposition rate higher than that in the case where no polymer was added by +0.5% or more and less than +1.0%: +

An anti-redeposition rate higher than that in the case where no polymer was added by less than +0.5%: - Anti-redeposition properties for polyester

An anti-redeposition rate higher than that in the case where no polymer was added by +4.0% or more: ++

An anti-redeposition rate higher than that in the case where no polymer was added by +2.0% or more and less than +4.0%: +

An anti-redeposition rate higher than that in the case where no polymer was added by less than +2.0%: -

<Evaluation of antibacterial properties>

(1) Preparation of hard water

First, 8.39 g of calcium chloride dihydrate and 2.9 g of magnesium chloride hexahydrate were weighed into a beaker, and ion-exchanged water was added thereto to prepare 1,000 g of a hard mother liquor.

Then, 1.54 g of sodium bicarbonate, 10 g of 0.1 N hydrogen chloride, and 200 g of the hard mother liquor were placed in a beaker and diluted with ion-exchanged water to prepare 20,000 g of hard water.

(2) Method of pretreatment of fabric

Style 730 was cut into pieces with a size of 5 × 5 cm. Using the hard water described in (1), 55 g of an aqueous solution was prepared so that the amount of any of the copolymers obtained in the EXAMPLES was 100 ppm. The aqueous solution was placed in a 70 cc mayonnaise bottle, and 5.5 g of the pieces of Style 730 was added, followed by stirring for one hour. After the stirring, the pieces of Style 730 were dehydrated and air-dried for one day.

(3) Testing of antibacterial properties

The antibacterial properties of the pretreated test pieces of Style 730 were evaluated according to JIS L 1902:2015 (the absorption method in Determination of antibacterial activity of textile products). The antibacterial properties were evaluated using *Staphylococcus aureus* (NBRC 12732) by counting the viable cells by the pour plate culture method. The antibacterial performance was evaluated by comparison with an untreated test piece of 100% cotton

fabric, and the antibacterial properties against *Staphylococcus aureus* were evaluated using the antibacterial activity value represented by the following equation.

Antibacterial activity value = {log(control test piece, viable bacteria count after incubation) - log(control sample, viable bacteria count immediately after inoculation)} - {log(test piece, viable bacteria count after incubation) - log(test sample, viable bacteria count immediately after inoculation)}

The antibacterial properties were evaluated according to the following criteria.

Antibacterial activity value of 2.5 or more: ++
Antibacterial activity value of 2.0 or more and less than 2.5: +
Antibacterial activity value of less than 2.0: -

<Production Example 1>

A separable glass flask equipped with a thermometer, a reflux condenser, and a stirrer was charged with 62.3 g of ethanol, nitrogen was introduced at a flow rate of 100 ml/min for 60 minutes with stirring, and the content was heated to 70°C. The flow rate of nitrogen was changed to 50 ml/min, and to the polymerization reaction system having a constant temperature of 70°C were added under stirring the following solutions: a monomer solution 1 consisting of 20.3 g of dimethylaminoethyl acrylate (FUJIFILM Wako Pure Chemical Corporation, hereinafter also referred to as DAM), 11.8 g of ethanol, and 7.3 g of acetic acid; a monomer solution 2 consisting of 72.2 g of methoxypolyethylene glycol monomethacrylate (average number of moles of ethylene oxide added: 23, trade name "M-230G" available from Shin-Nakamura Chemical Co., Ltd., hereinafter also referred to as PGM23E), 6.0 g of methacrylic acid (hereinafter also referred to as MAA), and 33.5 g of ethanol; a monomer solution 3 consisting of 36.5 g of benzyl methacrylate (FUJIFILM Wako Pure Chemical Corporation, hereinafter also referred to as BnMA); and an aqueous initiator solution consisting of 50.1 g of a 3.5% ethanol solution of 2,2'-azobis(2,4-dimethylvaleronitrile) (trade name "V-65" available from FUJIFILM Wako Pure Chemical Corporation). These solutions were added dropwise through separate dropping nozzles. Regarding the dropping time, the dropwise addition of the monomer solutions and the aqueous initiator solution started at the same time, and the monomer solutions 1, 2, and 3 were each added dropwise over 180 minutes, and the aqueous initiator solution was added dropwise over 240 minutes.

After completion of the dropwise addition of all the solutions, the reaction solution was kept at 70°C for another 60 minutes for aging to complete the polymerization. Thereby, a copolymer 1 was obtained. The results are shown in Table 1.

<Production Examples 2 to 20>

Copolymers 2 to 20 were produced as in Production Example 1, except that the amount of solvent, the amounts of monomers, the types of monomers, and the amount of initiator were changed so that the copolymers had the corresponding compositions and molecular weights shown in Table 1. The types of monomers that were not used in Production Example 1 but were used in the polymerization of Production Examples 2 to 20 are as follows: lauryl methacrylate (trade name "Light Ester L" available from Kyoeisha Chemical Co., Ltd., hereinafter also referred to as LMA); butyl methacrylate (hereinafter also referred to as BMA); cyclohexyl methacrylate (hereinafter also referred to as CHMA); 2-ethylhexyl acrylate (hereinafter also referred to as 2EHA); and methoxypolyethylene glycol monomethacrylate (average number of moles of ethylene oxide added: 9, trade name "BLEMMER PME-400" available from NOF Corporation, hereinafter also referred to as PGM9E). The results are shown in Table 1.

[Table 1]

| Production Example | Copolymer | % by mass | | | | Type of monomer | | | | Mw |
|---|---|---|---|---|---|---|---|---|---|---|
| | | Monomer having polyalkylene glycol chain | Amino group-containing monomer | Hydrophobic monomer | Unsaturated carboxylic acid monomer | Monomer having polyalkylene glycol chain | Amino group-containing monomer | Hydrophobic monomer | Unsaturated carboxylic acid monomer | |
| Production Example 1 | Copolymer 1 | 54 | 15 | 27 | 4 | PGM23E | DAM | Bn MA | MAA | 22000 |
| Production Example 2 | Copolymer 2 | 41 | 26 | 30 | 3 | PGM23E | DAM | Bn MA | MAA | 20000 |
| Production Example 3 | Copolymer 3 | 60 | 15 | 20 | 5 | PGM23E | DAM | Bn MA | MAA | 23000 |
| Production Example 4 | Copolymer 4 | 55 | 30 | 10 | 5 | PGM23E | DAM | Bn MA | MAA | 27000 |
| Production Example 5 | Copolymer 5 | 55 | 10 | 30 | 5 | PGM23E | DAM | Bn MA | MAA | 21000 |
| Production Example 6 | Copolymer 6 | 65 | 20 | 10 | 5 | PGM23E | DAM | Bn MA | MAA | 26000 |
| Production Example 7 | Copolymer 7 | 65 | 10 | 20 | 5 | PGM23E | DAM | BnMA | MAA | 24000 |
| Production Example 8 | Copolymer 8 | 55 | 20 | 20 | 5 | PGM23E | DAM | BnMA | MAA | 24000 |
| Production Example 9 | Copolymer 9 | 42 | 20 | 35 | 3 | PGM23E | DAM | Bn MA | MAA | 23000 |
| Production Example 10 | Copolymer 10 | 42 | 30 | 25 | 3 | PGM23E | DAM | Bn MA | MAA | 25000 |
| Production Example 11 | Copolymer 11 | 42 | 20 | 35 | 3 | PGM23E | DAM | LMA | MAA | 15000 |
| Production Example 12 | Copolymer 12 | 42 | 20 | 35 | 3 | PGM23E | DAM | BMA | MAA | 22000 |
| Production Example 13 | Copolymer 13 | 42 | 20 | 35 | 3 | PGM23E | DAM | CHMA | MAA | 23000 |

(continued)

| Production Example | Copolymer | % by mass | | | | Type of monomer | | | | Mw |
|---|---|---|---|---|---|---|---|---|---|---|
| | | Monomer having polyalkylene glycol chain | Amino group-containing monomer | Hydrophobic monomer | Unsaturated carboxylic acid monomer | Monomer having polyalkylene glycol chain | Amino group-containing monomer | Hydrophobic monomer | Unsaturated carboxylic acid monomer | |
| Production Example 14 | Copolymer 14 | 42 | 20 | 35 | 3 | PGM23E | DAM | 2EHA | MAA | 19000 |
| Production Example 15 | Copolymer 15 | 30 | 33 | 34 | 3 | PGM9E | DAM | BMA | MAA | 28000 |
| Production Example 16 | Copolymer 16 | 55 | 15 | 29 | 1 | PGM23E | DAM | BMA | MAA | 27000 |
| Production Example 17 | Copolymer 17 | 72 | 18 | 5 | 5 | PGM23E | DAM | LMA | MAA | 30000 |
| Production Example 18 | Copolymer 18 | 51 | 10 | 35 | 4 | PGM23E | DAM | Bn MA | MAA | 25000 |
| Production Example 19 | Copolymer 19 | 51 | 20 | 25 | 4 | PGM23E | DAM | Bn MA | MAA | 25000 |
| Production Example 20 | Copolymer 20 | 60 | 10 | 25 | 5 | PGM23E | DAM | Bn MA | MAA | 25000 |

<Comparative Production Example 1>

A separable glass flask equipped with a thermometer, a reflux condenser, and a stirrer was charged with 33.3 g of 2-butanone. Then, 10.00 g of DAM, 6.67 g of lauryl acrylate (hereinafter also referred to as LA), 33.33 g of PGM23E, and 0.80 g of V-65 were added thereto. The contents were stirred for a certain period of time under a nitrogen atmosphere. The solution was heated to about 60°C and kept at 60°C for seven hours for polymerization and aging. To the solution was added 200.0 g of 2-butanone for dilution, and the temperature was then lowered to room temperature. The reaction solution was added dropwise to 4000.0 g of n-hexane for purification by reprecipitation, and the precipitate was dried to obtain a comparative copolymer 1.

<Comparative Production Example 2>

A separable glass flask equipped with a thermometer, a reflux condenser, and a stirrer was charged with 900 g of ethanol. Then, 17.8 g of DAM, 7.2 g of lauryl methacrylate (hereinafter also referred to as LMA), and 10.6 g of 6.6% V-65 were added thereto. The contents were stirred for a certain period of time under a nitrogen atmosphere. The solution was heated to about 60°C and kept at 60°C for eight hours for polymerization and aging. To the solution was added 50.0 g of ethanol for dilution, and the temperature was lowered to room temperature. The reaction solution was added dropwise to 2000.0 g of ion-exchanged water for purification by reprecipitation, and the precipitate was dried to obtain a comparative copolymer 2.

The "Evaluation 1 of soil release properties" was performed in Examples 1 to 14 in which the copolymers produced in Production Examples 2, 4, 6, 8 to 17, and 19 were used, in Comparative Example 1 in which no polymer was used, and in Comparative Example 2 for Comparative Production Example 2. The results are shown in Table 2.

[Table 2]

| | Copolymer | Evaluation 1 of soil release properties |
|---|---|---|
| Example 1 | Copolymer 2 | + |
| Example 2 | Copolymer 4 | + |
| Example 3 | Copolymer 6 | ++ |
| Example 4 | Copolymer 8 | + |
| Example 5 | Copolymer 9 | ++ |
| Example 6 | Copolymer 10 | + |
| Example 7 | Copolymer 11 | + |
| Example 8 | Copolymer 12 | ++ |
| Example 9 | Copolymer 13 | + |
| Example 10 | Copolymer 14 | + |
| Example 11 | Copolymer 15 | ++ |
| Example 12 | Copolymer 16 | ++ |
| Example 13 | Copolymer 17 | + |
| Example 14 | Copolymer 19 | + |
| Comparative Example 1 | No polymer | - |
| Comparative Example 2 | Comparative copolymer 2 | - |

Table 2 demonstrates that the copolymers of the present disclosure have excellent soil release properties.

Anti-redeposition properties for cotton were evaluated in Examples 15 to 23 using the copolymers produced in the production examples and in Comparative Example 3 using the comparative copolymer 1 produced in the comparative production example. The results are shown in Table 3.

[Table 3]

| | Copolymer | Anti-redeposition properties for cotton |
|---|---|---|
| Example 15 | Copolymer 1 | + |
| Example 16 | Copolymer 3 | + |
| Example 17 | Copolymer 5 | ++ |
| Example 18 | Copolymer 8 | + |
| Example 19 | Copolymer 9 | + |
| Example 20 | Copolymer 11 | + |
| Example 21 | Copolymer 13 | + |
| Example 22 | Copolymer 18 | ++ |
| Example 23 | Copolymer 20 | ++ |
| Comparative Example 3 | Comparative copolymer 1 | - |

Also, anti-redeposition properties for polyester were evaluated in Examples 24 to 41 using the copolymers produced in the production examples and in Comparative Example 4 using the comparative copolymer 1 produced in the comparative production example. The results are shown in Table 4.

[Table 4]

| | Copolymer | Anti-redeposition properties for polyester |
|---|---|---|
| Example 24 | Copolymer 1 | + |
| Example 25 | Copolymer 2 | ++ |
| Example 26 | Copolymer 3 | + |
| Example 27 | Copolymer 4 | + |
| Example 28 | Copolymer 5 | + |
| Example 29 | Copolymer 8 | + |
| Example 30 | Copolymer 9 | ++ |
| Example 31 | Copolymer 10 | ++ |
| Example 32 | Copolymer 11 | ++ |
| Example 33 | Copolymer 12 | ++ |
| Example 34 | Copolymer 13 | ++ |
| Example 35 | Copolymer 14 | ++ |
| Example 36 | Copolymer 15 | + |
| Example 37 | Copolymer 16 | ++ |
| Example 38 | Copolymer 17 | + |
| Example 39 | Copolymer 18 | ++ |
| Example 40 | Copolymer 19 | ++ |
| Example 41 | Copolymer 20 | ++ |
| Comparative Example 4 | Comparative copolymer 1 | - |

Antibacterial properties were evaluated in Examples 42 to 46 in which the copolymers produced in the production examples were used and in Comparative Example 5 in which no polymer was used. The results are shown in Table 5.

[Table 5]

| | Copolymer | Antibacterial properties |
|---|---|---|
| Example 42 | Copolymer 6 | ++ |
| Example 43 | Copolymer 7 | ++ |
| Example 44 | Copolymer 8 | ++ |
| Example 45 | Copolymer 9 | ++ |
| Example 46 | Copolymer 10 | ++ |
| Comparative Example 5 | No polymer | - |

Tables 3 to 5 demonstrate that the copolymers of the present disclosure also have excellent anti-redeposition properties and antibacterial properties.

## Claims

1. An amino group-containing copolymer comprising:

   a structural unit (a) derived from an amino group-containing monomer;
   a structural unit (b) derived from a monomer having a polyalkylene glycol chain;
   a structural unit (c) derived from a hydrophobic monomer; and
   a structural unit (d) derived from an unsaturated carboxylic acid monomer,
   the structural unit (a) being represented by the following formula (1):

   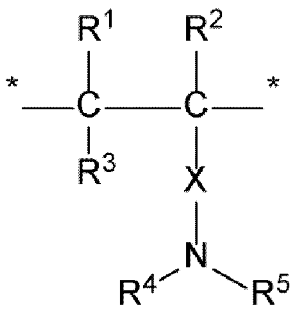

   Formula (1)

   wherein $R^1$, $R^2$, and $R^3$ each independently represent a hydrogen atom or a C1-C5 alkyl group; $R^4$ and $R^5$ each independently represent a hydrogen atom or a C1-C12 organic group; and X represents a divalent linking group, where each of asterisks represents an atom in another structural unit to which the structural unit represented by the formula (1) is bonded, with the another structural unit being the same as or different from the structural unit represented by the formula (1).

2. The amino group-containing copolymer according to claim 1,
   wherein a homopolymer of the hydrophobic monomer has a solubility parameter of 13 or less.

3. The amino group-containing copolymer according to claim 1,
   wherein the structural unit (a) derived from an amino group-containing monomer is present in a proportion of 5 to 50% by weight based on 100% by mass of all structural units.

4. The amino group-containing copolymer according to claim 1,
   wherein the amino group-containing copolymer has a weight average molecular weight of 4,000 or more and 500,000 or less.

5. A soil release agent comprising the amino group-containing copolymer according to claim 1.

6. A method for using the amino group-containing copolymer according to claim 1 for a soil release agent.

**7.** A method for producing a soil release agent, comprising: mixing the amino group-containing copolymer according to claim 1 and a surfactant.

**INTERNATIONAL SEARCH REPORT**

International application No.
**PCT/JP2023/015994**

**A. CLASSIFICATION OF SUBJECT MATTER**

***C08F 290/06***(2006.01)i; ***C08F 20/00***(2006.01)i; ***C08F 220/34***(2006.01)i; ***C11D 3/26***(2006.01)i; ***C11D 3/37***(2006.01)i; ***C11D 7/26***(2006.01)i; ***C11D 7/32***(2006.01)i; ***D06L 1/12***(2006.01)i; ***D06M 15/267***(2006.01)i; ***D06M 15/27***(2006.01)i
FI: C08F290/06; C11D7/32; C11D7/26; C11D3/26; C08F20/00; D06M15/267; D06M15/27; C08F220/34; D06L1/12; C11D3/37

According to International Patent Classification (IPC) or to both national classification and IPC

**B. FIELDS SEARCHED**

Minimum documentation searched (classification system followed by classification symbols)

C08F290/06; C08F20/00; C08F220/34; C11D3/26; C11D3/37; C11D7/26; C11D7/32; D06L1/12; D06M15/267; D06M15/27

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 2021-195456 A (NIPPON CATALYTIC CHEM IND) 27 December 2021 (2021-12-27) claims, paragraphs [0004], [0036], [0101], [0102], [0110], [0111], examples | 1-7 |
| A | JP 2014-206700 A (TOYO INK SC HOLDINGS CO LTD) 30 October 2014 (2014-10-30) entire text | 1-7 |
| A | WO 2018/135370 A1 (DNP FINE CHEMICALS CO., LTD.) 26 July 2018 (2018-07-26) entire text | 1-7 |
| P, X | WO 2022/215652 A1 (NIPPON CATALYTIC CHEM IND) 13 October 2022 (2022-10-13) claims, examples | 1-7 |

☐ Further documents are listed in the continuation of Box C.   ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **04 July 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/015994**

| Patent document cited in search report | Publication date (day/month/year) | Patent family member(s) | Publication date (day/month/year) |
|---|---|---|---|
| JP 2021-195456 A | 27 December 2021 | (Family: none) | |
| JP 2014-206700 A | 30 October 2014 | (Family: none) | |
| WO 2018/135370 A1 | 26 July 2018 | CN 110114702 A | |
| | | TW 201833243 A | |
| WO 2022/215652 A1 | 13 October 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5014739 B
- JP H11505568 T


### Non-patent literature cited in the description


- *POLYMER ENGINEERING AND SCIENCE*, 1974, vol. 14 (2), 147-154